# EUROPÄISCHE PATENTSCHRIFT

(11) **EP 2 329 548 B1**
(45) Veröffentlichungstag und Bekanntmachung des Hinweises auf die Patenterteilung: **27.06.2012**
(21) Anmeldenummer: 09781322.4
(22) Anmeldetag: 31.07.2009
(51) Int. Cl.: H01M 2/10, H01M 10/04, H01M 10/50

(54) **BATTERIEMODUL**
BATTERY MODULE
MODULE DE BATTERIE

(30) Priorität: 26.08.2008 DE 102008041547
(43) Veröffentlichungstag der Anmeldung: 08.06.2011
(73) Patentinhaber: Robert Bosch GmbH, 70442 Stuttgart (DE)
(72) Erfinder: KOENIGSMANN, Martin, Holger, 70193 Stuttgart (DE)
(86) Internationale Anmeldenummer: PCT/EP2009/059914
(87) Internationale Veröffentlichungsnummer: WO 2010/023063

(56) Entgegenhaltungen:
- EP-A- 1 117 138
- WO-A-99/05749
- DE-A1- 10 112 162
- US-A1- 2003 165 734

## Beschreibung

Die Erfindung betrifft ein Batteriemodul gemäß dem Oberbegriff des Anspruches 1. Ferner betrifft die Erfindung ein Batteriemodulsystem.

### Stand der Technik

Batterien z. B. Nickel-Cadmium, Nickel-Metallhydrid und insbesondere Lithium-Ionen-Batterien, versorgen verschiedene Einrichtungen, z. B. Kraftfahrzeuge, Krankenhäuser oder Bohrmaschinen mit elektrischem Strom. Im Allgemeinen werden mehrere Batterien in einem Gehäuse eingebaut und bilden dadurch ein Batteriemodul. Batteriemodule haben den Vorteil, dass diese leichter mit einem Kühlfluid gekühlt und höhere elektrische Leistungen durch die Kombination mehrerer Batteriemodule zu einem Batteriemodulsystem realisiert werden können.

Bei den meisten technischen Anwendungen sollen Batteriemodule und Batteriemodulsysteme eine möglichst hohe elektrische Leistung bzw. Energie pro Volumeneinheit zur Verfügung stellen können. Die Leistungs- bzw. Energiedichte ist zu maximieren. Es sind zylinderförmige Batterien bekannt, die in einem Gehäuse angeordnet sind. Aufgrund der Zylinderform der Batterien ergeben sich jedoch innerhalb des Gehäuses Freiräume, so dass dadurch der Raum innerhalb des Gehäuses mit den Batterien nicht optimal für eine maximale Leistungsdichte ausgenutzt ist. Bei prismatischen, planaren oder quaderförmigen Batterien kann der Innenraum innerhalb eines Gehäuses eines Batteriemoduls optimal ausgenützt werden. Die Batterien weisen ebene Außenflächen auf, auf denen diese übereinander oder nebeneinander gestapelt werden können, so dass sich keine ungenutzten Freiräume ergeben. Problematisch bei dieser Anordnung ist es jedoch, diese dicht gepackten Batterien innerhalb des Batteriemoduls zu kühlen. Insbesondere bei Lithium-Ionen-Batterien ist eine geringe Temperaturdifferenz zwischen den Batterien, z. B. von weniger als 4 Kelvin, erforderlich. Des Weiteren sollen bei Lithium-Ionen-Batterien die Temperaturen nicht höher als 60 Grad liegen. Aus diesem Grund ist eine ausreichende Kühlung erforderlich, um die Lebensdauer der Batterien nicht zu verkürzen und außerdem das Sicherheitsrisiko, z. B. aufgrund einer lokalen Überhitzung, und einer Zerstörung einzelner Batterien bzw. einer Kettenreaktion einer Zerstörung von Batterien innerhalb eines Batteriemoduls zu verhindern.

Die EP 1117 138 A1 zeigt eine Kühlstruktur für eine prismatische Batterieanordnung. Die Batterieanordnungen sind parallel zueinander angeordnet, so dass ebene Seitenflächen gegenüberliegend positioniert sind. Zwischen diesen ebenen Seitenflächen sind wellrippenartige Abstandseinheiten aus Metall angeordnet. Die wellrippenartigen Abstandsordner dienen dazu, dass ein Kühlmedium zwischen den ebenen Seitenflächen der Batterieanordnungen geleitet werden kann. Nachteiligerweise ergeben sich bei dieser Kühlstruktur zwischen den ebenen Seitenflächen zusätzliche Freiräume, so dass der Bauraum nicht optimal genutzt werden kann. Ferner ist es zwingend erforderlich, die Batterieanordnung mittels eines strömenden Fluids zu kühlen.

Die US 2003/0165734 A1 zeigt prismatische Batteriezellen, zwischen denen eine scheibenartige Kühlrippe aus wärmeleitendem Material angeordnet ist. Nachteiligerweise kann es jedoch zu einer Überhitzung der Batterien kommen, weil sich die einzelnen Batterien gegenseitig aufgrund der hohen Wärmeleitfähigkeit der Kühlrippen zwischen den Batterien erwärmen können.

### Offenbarung der Erfindung

Ein erfindungsgemäßes Batteriemodul, umfasst wenigstens zwei in dem Gehäuse angeordnete Batterien, wenigstens ein zwischen den wenigstens zwei Batterien angeordnetes Kühlelement zum Ableiten der von den wenigstens zwei Batterien erzeugten Wärme zwischen den wenigstens zwei Batterien, wobei das wenigstens eine Kühlelement in Richtung einer x-Achse und in Richtung einer y-Achse eine größere Ausdehnung aufweist als in Richtung eine z-Achse, und die x-, y- und z-Achsen ein rechtwinkliges Koordinatensystem bilden, wobei das wenigstens eine Kühlelement in Richtung der x-Achse und/oder in Richtung der y-Achse eine größere Wärmeleitfähigkeit in W/mK (Watt/Meter * Kelvin) aufweist als in Richtung der z-Achse.

Das Kühlelement weist in Richtung der x-Achse und/oder in der Richtung der y-Achse eine größere Wärmeleitfähigkeit auf als in Richtung der z-Achse. Damit weist das im Allgemeinen scheibenartige Kühlelement in Richtung der Ebene des Kühlelementes, d. h. zum Ableiten an die Außenseite der Batterien, eine höhere Wärmeleitfähigkeit auf als zwischen den einzelnen Batterien. Das Kühlelement hat dadurch in besonders vorteilhafterweise zwei Funktionen. Einerseits kann das Kühlelement aufgrund der großen Wärmeleitfähigkeit in Richtung der z-Achse die entstandene Wärme gut zwischen den Batterien ableiten. Ferner isoliert das Kühleelement thermisch die einzelnen Batterien zwischeneinander aufgrund der geringeren Wärmeleitfähigkeit in Richtung der z-Achse. Dieses thermische Isolationsvermögen verhindert damit ein Erwärmen bzw. einen Hitzestau zwischen den dicht gepackten einzelnen Batterien. Die Wärmeübertragung von den Batterien nach außen in dem Zwischenraum zwischen den Batterien erfolgt mittels Wärmeleitung gut aufgrund der unterschiedlichen Wärmeleitfähigkeit in Abhängigkeit von der entsprechenden Richtung. Das Kühlelement ist in der Lage, selektiv die Wärmeleitung in Abhängigkeit von der Richtung zu steuern, so dass in Richtung der x- und y-Achse, d. h. in der Richtung der Ebene, die entstandene Wärme zwischen den Batterien besonders gut und schnell abgeleitet wird.

Insbesondere ist die Wärmeleitfähigkeit des wenigstens einen Kühlelements in Richtung der x-Achse und/oder in Richtung der y-Achse um das 2 bis 300-fache größer als in Richtung der z-Achse. Insbesondere ist die Wärmeleitfähigkeit des wenigstens einen Kühlelements in Richtung der x-Achse und/oder in Richtung der y-Achse um das 40 bis 50-fache größer als in Richtung der z-Achse. Die Wärmeleitfähigkeit ist damit signifikant unterschiedlich, so dass das Kühlelement einen wesentlichen Beitrag einerseits zur Isolierung, d. h. der thermischen Isolierung, zwischen den Batterien leistet und andererseits eine sehr hohe Wärmeleitfähigkeit in Richtung der Ebene des Kühlelementes aufweist.

In einer weiteren Ausgestaltung liegt die Wärmeleitfähigkeit des wenigstens einen Kühlelements in Richtung der x-Achse und/oder in Richtung der y-Achse zwischen 50 und 500. Insbesondere liegt die Wärmeleitfähigkeit in Richtung der x-Achse und/oder in Richtung der y-Achse im Bereich zwischen 180 bis 200 W/mK. Aluminium weist beispielsweise eine Wärmeleitfähigkeit von ungefähr 220 W/mK auf. Damit verfügt das Kühlelement über eine sehr gute Wärmeleitfähigkeit.

Vorzugsweise liegt die Wärmeleitfähigkeit des wenigstens einen Kühlelements in Richtung der z-Achse zwischen 0 und 70. Insbesondere beträgt die Wärmeleitfähigkeit des wenigstens einen Kühlelements in Richtung der z-Achse ungefähr 2 bis 10 W/mK. Kunststoffe weisen beispielsweise eine Wärmeleitfähigkeit von ungefähr 2 bis 3 W/mK auf, so dass das Kühlelement in dieser Richtung eine sehr geringe Wärmeleitfähigkeit, d. h. bereits ein signifikantes thermisches Isolierungsvermögen, aufweist, und dadurch in besonders vorteilhafterweise eine thermische Überhitzung der dicht gepackten Batterien verhindert wird.

In einer Variante besteht das wenigstens eine Kühlelement wenigstens teilweise aus Graphit, insbesondere Spezialgraphit aus expandiertem Graphit.

Zweckmäßig ist das wenigstens eine Kühlelement als Scheibe, z. B. Folie, mit einer Schichtdicke von weniger als 1 cm ausgebildet. Bei einer Ausbildung des Kühlelementes als Folie mit einer geringen Schichtdicke, z. B. zwischen 0 und 3 mm, kann das als Folie ausgebildete Kühlelement zur Herstellung des Batteriemoduls sehr leicht zwischen den einzelnen Batterien angeordnet werden und ferner benötigt das Kühlelement aufgrund der geringen Schichtdicke nur wenig Raum, so dass das Batteriemodul eine sehr hohe Energie- bzw. Leistungsdichte aufweist.

In einer weiteren Ausführungsform sind die wenigstens zwei Batterien an der Oberfläche in den Abschnitten, die an einem Zwischenraum zwischen den zwei Batterien mit dem wenigstens einen Kühlelement angrenzen, eben.

Insbesondere steht das wenigstens eine Kühlelement an der Oberfläche der wenigstens zwei Batterien in den Abschnitten, die an dem Zwischenraum zwischen den zwei Batterien mit dem wenigstens einen Kühlelement angrenzen, zu wenigstens 50 % in Kontakt mit den wenigstens zwei Batterien. Im Allgemeinen steht das Kühlelement an der Oberfläche der wenigstens zwei Batterien in den Abschnitten, die an dem Zwischenraum zwischen den zwei Batterien mit dem wenigstens einen Kühlelement angrenzt, zu 100 % oder nahezu 100 % in Kontakt mit den wenigstens 2 Batterien. Der Kontakt erfolgt normalerweise unmittelbar, kann jedoch auch mittelbar durch einen weiteren Stoff, z. B. ein Kontaktgel, erfolgen. Dadurch kann eine gute Wärmeleitung von den Batterien zu dem Kühlelement gewährleistet werden und ferner der Innenraum in dem Batteriemodul optimal ausgenützt werden, weil keine Freiräume vorhanden sind.

In einer weiteren Ausgestaltung kann das wenigstens eine Kühlelement einen über den Zwischenraum zwischen den wenigstens zwei Batterien hinausgehenden Fortsatz aufweisen, um an dem Fortsatz die von dem wenigstens einen Kühlelement zwischen den wenigstens zwei Batterien aufgenommene Wärme besser abzuleiten. In dem Kühlelement aufgenommene Wärme muss abgeleitet werden. Die Ausbildung des Fortsatzes hat den Vorteil, dass die Wärme aufgrund der größeren Oberfläche des Fortsatzes besser abgegeben werden kann. Sofern kein Fortsatz ausgebildet ist, steht als Oberfläche zum Ableiten der von dem Kühlelement aufgenommenen Wärme lediglich der Rand oder das Ende des Kühlelementes zwischen den quaderförmigen Batterien zur Verfügung.

In einer ergänzenden Variante weist das Gehäuse wenigstens eine Einlassöffnung zum Einleiten eines Kühlfluids in das Gehäuse, wenigstens eine Auslassöffnung zum Ausleiten des Kühlfluids aus dem Gehäuse auf und es ist ein Teil des wenigstens einen Kühlelementes, insbesondere der Fortsatz, in Kontakt mit dem Kühlfluid bringbar zum Ableiten der Wärme.

In einer weiteren Variante ist die Batterie eine Lithium-Ionen-Batterie und/oder das Kühlfluid ist Luft, Wasser, Glykol oder Öl, z. B. Silikonöl.

Anstelle der Ableitung der von dem Kühlelement aufgenommenen Wärme durch ein Kühlfluid mittels Konvektion kann die aufgenommene Wärme auch mittels Wärmestrahlung und/oder mittels Wärmeleitung aufgenommen werden. Beispielsweise kann in dem Gehäuse lediglich eine nicht-bewegte, statische Flüssigkeit angeordnet sein, welche die Wärme nicht mittels Konvektion sondern mittels Wärmeleitung ableitet. Die Flüssigkeit kann Wärme aufnehmen und die damit dazu dienen, Wärmespitzen abzufangen und die Betriebstemperaturen der Batterien zu homogenisieren. Ferner besteht auch die Möglichkeit diese Flüssigkeit nur umzuwälzen, um so eine homogene Temperaturverteilung zu ermöglichen.

Bei einer Kühlung der Batterien mittels eines strömenden Kühlfluides können innerhalb des Gehäuses Fluidleiteinrichtungen eingesetzt werden, welche das Fluid verwirbeln und so eine homogenere Temperaturverteilung ermöglichen. Bei der Verwendung einer Flüssigkeit wie beispielsweise Wasser, Glykol oder Silikonöl kann dieses nicht nur dazu dienen, die Wärme abzuleiten, sondern in einem Störfall als Löschmittel für die Batterien fungieren oder kann einen Brand oder eine Explosion verhindern.

Das Kühlelement sowie das Kühlfluid kann nicht nur zur Kühlung dienen, sondern auch dazu, Batterien des Batteriemoduls auf eine optimale Betriebstemperatur zu erwärmen. Das Kühlfluid wird von einer vorzugsweise elektrischen Heizeinrichtung erwärmt. Ein Batteriemanagementsystem steuert und/oder regelt in Abhängigkeit vom Betriebszustand der Batterien die Temperatur und erwärmt bzw. kühlt die Batterien entsprechend dem gerade notwendigen bzw. vorhandenen Betriebszustand. Hierzu wird normalerweise eine Steuer- und Regeleinrichtung und/oder wenigstens ein Sensor, insbesondere Temperatursensor, genutzt.

Zweckmäßig besteht das Gehäuse aus Metall oder Kunststoff.

Ein erfindungsgemäßes Batteriemodulsystem mit mehreren Batteriemodulen umfasst wenigstens ein oben beschriebenes Batteriemodul.

Im Nachfolgenden wird ein Ausführungsbeispiel der Erfindung unter Bezugnahme auf die beigefügten Zeichnungen näher beschrieben. Es zeigt:
- Fig. 1: einen perspektivische Ansicht der Batterien mit Kühlelementen eines Batteriemoduls ohne Gehäuse,
- Fig. 2: einen schematischen Längsschnitt des Batteriemoduls gemäß Fig. 1 und
- Fig. 3: einen stark schematisierten Längsschnitt eines Batteriemodulsystems.

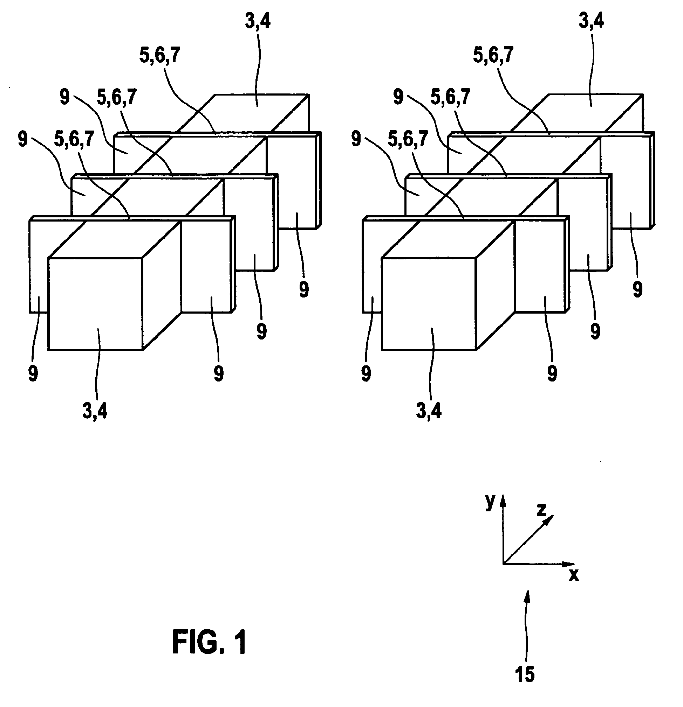

In Fig. 1 ist eine perspektivische Ansicht der Batterien 3 eines Batteriemoduls 1 dargestellt. Die Batterien 3 sind in einem Gehäuse 2 angeordnet, wobei das Gehäuse 2 in Fig. 1 nicht dargestellt ist. Die Batterien 3 sind quaderförmig. Zwischen jeweils einer Seitenfläche der quaderförmigen Batterien 3 ist jeweils ein Kühlelement 5 angeordnet. Das Kühlelement 5 stellt eine Scheibe 6 dar und weist eine Schichtdicke im Bereich von 2 bis 3 mm auf. Aufgrund der leichten Verformbarkeit, insbesondere Biegbarkeit, ist das Kühlelemente 5 auch eine Folie 7. Das Kühlelement 5 besteht aus einem Spezialgraphit zur selektiven Wärmeleitung. Das Kühlelement 5 weist in Richtung einer x- und y-Achse eines Koordinatensystems 15 die 40- bis 50-mal größere Wärmeleitfähigkeit W/m K auf als in Richtung der z-Achse des Koordinatensystems 15. Die Wärmeleitfähigkeit W/mK in Richtung der x- und y-Achse, in der Richtung der Ebene des Kühlelementes 5, beträgt ungefähr 180 bis 200 W/mK. In einer Richtung senkrecht zur Ebene, d. h. in Richtung der z-Achse des Koordinatensystems beträgt die Wärmeleitfähigkeit des Kühlelementes ungefähr 4 bis 6 W/mK.

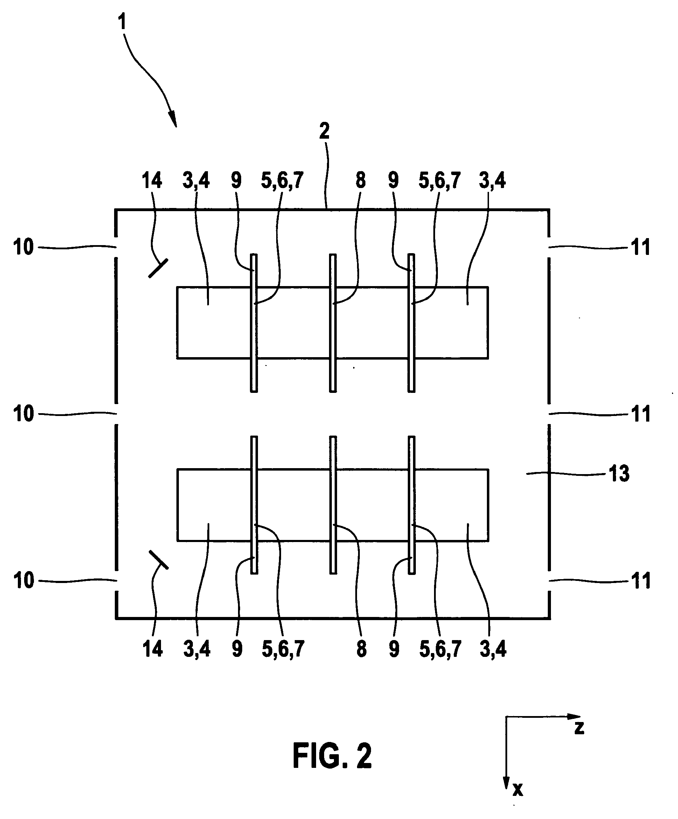

Das Kühlelement 5 kann damit die in den als Lithium-Ionen-Batterien 4 ausgebildeten Batterien 3 entstehende Wärme in einem Zwischenraum 8 zwischen den Batterien, in dem das Kühlelement 5 angeordnet ist, selektiv ableiten (Fig. 1 und 2). Die in den Batterien 3 entstandene Wärme wird dadurch von dem Kühlelement 5 zu den Fortsätzen 9 des Kühlelementes 5 abgeleitet. Aufgrund der geringen Wärmeleitfähigkeit W/mK des Kühlelementes 5 in Richtung der z-Achse wirkt das Kühlelement 5 zusätzlich auch noch als Isolierung zwischen den einzelnen Batterien 3, so dass eine Überhitzung der dicht gepackten Batterien 3 innerhalb des Batteriemoduls 1 in vorteilhafter Weise verhindert werden kann. Die Fortsätze 9 stehen beispielsweise in einer Länge von 1 bis 4 cm über die Batterien 3 hinaus. Zur Kühlung der in dem Batteriemodul 1 angeordneten Batterien 3 wird in das Gehäuse 2 durch Einlassöffnungen 10 Luft als Kühlfluid ein- und durch Auslassöffnungen 11 aus dem Gehäuse 2 wieder herausgeleitet (Fig. 2). Das Kühlfluid nimmt dabei die in den Batterien 3 entstandene Wärme sowohl unmittelbar von der Oberfläche der Batterien 3 als auch mittelbar an den Fortsätzen 9 auf. In einem Innenraum 13 des Batteriemoduls 1 sind Fluidleiteinrichtungen 14 angeordnet. Die Fluidleiteinrichtungen, beispielsweise als Bleche ausgebildet, dienen dazu, das Kühlfluid zu verwirbeln und dadurch eine homogene Temperaturverteilung innerhalb der Batterien 3 zu ermöglichen. Ferner können die Fluidleiteinrichtungen 14 auch dazu dienen, die Strömung des Fluids insbesondere die Strömungsrichtung des Fluids zu steuern, so dass der Volumenstrom des Kühlfluids den thermischen Anforderungen der Batterien 3 zum Kühlen entspricht (Fig. 2). Die Luft wird mittels eines nicht dargestellten Gebläses oder Ventilators in die Einlassöffnungen 10 eingeleitet.

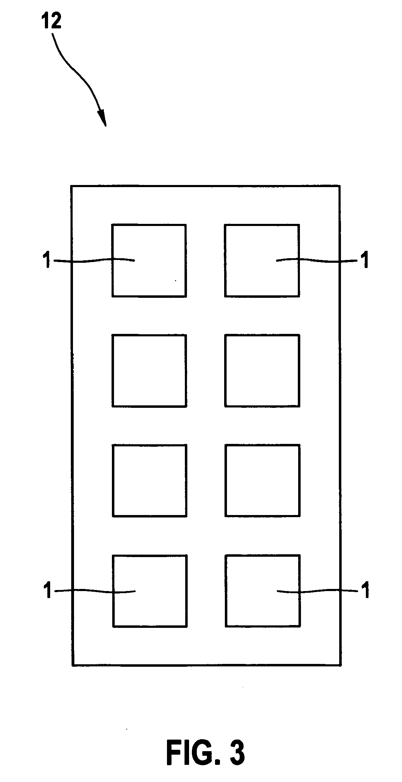

Mehrere Batteriemodule 1 können auch zu einem Batteriemodulsystem 12 verbunden werden (Fig. 3). Die Einlass- und Auslassöffnungen 10, 11 der einzelnen Batteriemodule 1 werden zu einer zentralen Luftzufuhr, z. B. einem Ventilator, parallel geschaltet (nicht in Fig. 3 dargestellt). In einem Batteriemodulsystem 12, beispielsweise für ein Personen- oder Nutzfahrzeug mit 8 Batteriemodulen 1 mit je sechs Lithium-Ionen-Batterien 4 befinden sich somit insgesamt 32 Lithium-Ionen-Batterien 4. Der modulare Aufbau gestattet damit eine bessere Skalierbarkeit, weil mit identischen Batteriemodulen 1 unterschiedliche elektrische Leistungen für verschiedene Anwendungen einfach realisiert werden können. Die Batteriemodule 1 bzw. das Batteriemodulsystem 12 kann beispielsweise für Hybridfahrzeuge, Elektrofahrzeuge oder für Elektrowerkzeuge bzw. Powertools eingesetzt werden. Ferner kommt auch die Anwendung als Pitch-System für Windräder oder auch zur Speicherung von elektrischem Strom bei Solaranlagen in Betracht.

Insgesamt betrachtet sind mit dem erfindungsgemäßen Batteriemodul 1 erhebliche Vorteile verbunden. Bei der Verwendung von quaderförmigen Batterien 3 innerhalb eines Batteriemoduls 1 können diese sehr dicht gepackt werden, so dass eine hohe Leistungsdichte des Batteriemoduls 1 bzw. des Batteriemodulsystems 12 realisiert werden kann. Die geringe Schichtdicke sowie die selektive Wärmeleitfähigkeit des Kühlelementes 5 gestattet es, Wärme zwischen den Batterien 3 aus dem Zwischenraum 8 gut abzuleiten und ferner die Batterien 3 gegenseitig an dem Zwischenraum 8 thermisch zu isolieren, so dass einerseits die Wärme gut abgeleitet und andererseits eine gegenseitige Überhitzung der dicht gepackten Batterien 3 verhindert wird.

## Patentansprüche

1. Batteriemodul (1), umfassend ein Gehäuse (2), wenigstens zwei in dem Gehäuse (2) angeordnete Batterien (3), wenigstens ein zwischen den wenigstens zwei Batterien (3) angeordnetes Kühlelement (5) zum Ableiten der von den wenigstens zwei Batterien (3) erzeugten Wärme zwischen den wenigstens zwei Batterien (3), wobei das wenigstens eine Kühlelement (5) in Richtung einer x-Achse und in Richtung einer y-Achse eine größere Ausdehnung aufweist als in Richtung eine z-Achse und die x-, y- und z-Achsen ein rechtwinkliges Koordinatensystem (15) bilden,
**dadurch gekennzeichnet, dass**
das wenigstens eine Kühlelement (5) in Richtung der x-Achse und/oder in Richtung der y-Achse eine größere Wärmeleitfähigkeit aufweist als in Richtung der z-Achse.

2. Batteriemodul nach Anspruch 1,
**dadurch gekennzeichnet, dass**
die Wärmeleitfähigkeit des wenigstens einen Kühlelements (5) in Richtung der x-Achse und/oder in Richtung der y-Achse um das 2 bis 300-fache größer ist als in Richtung der z-Achse.

3. Batteriemodul nach Anspruch 1 oder 2,
**dadurch gekennzeichnet, dass**
die Wärmeleitfähigkeit des wenigstens einen Kühlelements (5) in Richtung der x-Achse und/oder in Richtung der y-Achse zwischen 50 und 500 W/mK liegt.

4. Batteriemodul nach einem oder mehreren der vorhergehenden Ansprüche,
**dadurch gekennzeichnet, dass**
die Wärmeleitfähigkeit des wenigstens einen Kühlelements (5) in Richtung der z-Achse zwischen 0 und 70 W/m K liegt.

5. Batteriemodul nach einem oder mehreren der vorhergehenden Ansprüche,
**dadurch gekennzeichnet, dass**
das wenigstens eine Kühlelement (5) wenigstens teilweise aus Graphit besteht.

6. Batteriemodul nach einem oder mehreren der vorhergehenden Ansprüche,
**dadurch gekennzeichnet, dass**
das wenigstens eine Kühlelement (5) als Scheibe (6), z. B. Folie (7), mit einer Schichtdicke von weniger als 1 cm ausgebildet ist.

7. Batteriemodul nach einem oder mehreren der vorhergehenden Ansprüche,
**dadurch gekennzeichnet, dass**
die wenigstens zwei Batterien (3) an der Oberfläche in den Abschnitten, die an einem Zwischenraum (8) zwischen den zwei Batterien (3) mit dem wenigstens einen Kühlelement (5) angrenzen, eben sind.

8. Batteriemodul nach einem oder mehreren der vorhergehenden Ansprüche,
**dadurch gekennzeichnet, dass**
das wenigstens eine Kühlelement (5) an der Oberfläche der wenigstens zwei Batterien (3) in den Abschnitten, die an dem Zwischenraum (8) zwischen den zwei Batterien (3) mit dem wenigstens einen Kühlelement (5) angrenzen, zu wenigstens 50 % in Kontakt mit den wenigstens zwei Batterien (3) steht.

9. Batteriemodul nach einem oder mehreren der vorhergehenden Ansprüche,
**dadurch gekennzeichnet, dass**
das wenigstens eine Kühlelement (5) einen über den Zwischenraum (8) zwischen den wenigstens zwei Batterien (3) hinausgehenden Fortsatz (9) aufweist, um an dem Fortsatz (9) die von dem wenigstens einen Kühlelement (5) zwischen den wenigstens zwei Batterien (3) aufgenommene Wärme besser ableiten zu können.

10. Batteriemodul nach einem oder mehreren der vorhergehenden Ansprüche,
**dadurch gekennzeichnet, dass**
das Gehäuse (2) wenigstens eine Einlassöffnung (10) zum Einleiten eines Kühlfluids in das Gehäuse (2), wenigstens eine Auslassöffnung (11) zum Ausleiten des Kühlfluids aus dem Gehäuse (2) aufweist und ein Teil des wenigstens einen Kühlelementes (5), insbesondere der Fortsatz (9), in Kontakt mit dem Kühlfluid bringbar ist zum Ableiten der Wärme.

11. Batteriemodul nach Anspruch 10,
**dadurch gekennzeichnet, dass**
die Batterie eine Lithium-Ionen-Batterie (4) ist und/oder das Kühlfluid Luft, Wasser, Glykol oder Öl, z. B. Silikonöl, ist.

12. Batteriemodulsystem (12) mit mehreren Batteriemodulen (1),
**dadurch gekennzeichnet, dass**
das Batteriemodulsystem (12) wenigstens ein Batteriemodul (1) gemäß einem oder mehreren der vorhergehenden Ansprüche umfasst.

## Claims

1. Battery module (1) comprising a housing (2), at least two batteries (3) which are arranged in the housing (2), at least one cooling element (5), which is arranged between the at least two batteries (3), for dissipating the heat which is generated by the at least two batteries (3) between the at least two batteries (3), wherein the at least one cooling element (5) has a greater extent in the direction of an x-axis and in the direction of a y-axis than in the direction of a z-axis, and the x-, y- and z-axes form a right-angled coordinate system (15),
**characterized in that**
the at least one cooling element (5) has a greater thermal conductivity in the direction of the x-axis and/or in the direction of the y-axis than in the direction of the z-axis.

2. Battery module according to Claim 1,
**characterized in that**
the thermal conductivity of the at least one cooling element (5) is 2 to 300 times greater in the direction of the x-axis and/or in the direction of the y-axis than in the direction of the z-axis.

3. Battery module according to Claim 1 or 2,
**characterized in that**
the thermal conductivity of the at least one cooling element (5) is between 50 and 500 W/mK in the direction of the x-axis and/or in the direction of the y-axis.

4. Battery module according to one or more of the preceding claims,
**characterized in that**
the thermal conductivity of the at least one cooling element (5) is between 0 and 70 W/mK in the direction of the z-axis.

5. Battery module according to one or more of the preceding claims,
**characterized in that**
the at least one cooling element (5) is at least partially composed of graphite.

6. Battery module according to one or more of the preceding claims,
**characterized in that**
the at least one cooling element (5) is in the form of a plate (6), for example a film (7), having a layer thickness of less than 1 cm.

7. Battery module according to one or more of the preceding claims,
**characterized in that**
the at least two batteries (3) are flat at the surface in the sections which adjoin an intermediate space (8) between the two batteries (3) containing the at least one cooling element (5).

8. Battery module according to one or more of the preceding claims,
**characterized in that**
the at least one cooling element (5) is at least 50% in contact with the at least two batteries (3) at the surface of the at least two batteries (3) in the sections which adjoin the intermediate space (8) between the two batteries (3) containing the at least one cooling element (5).

9. Battery module according to one or more of the preceding claims,
**characterized in that**
the at least one cooling element (5) has a projection (9) which projects beyond the intermediate space (8) between the at least two batteries (3), in order to be able to better dissipate the heat absorbed by the at least one cooling element (5) between the at least two batteries (3) at the projection (9).

10. Battery module according to one or more of the preceding claims,
**characterized in that**
the housing (2) has at least one inlet opening (10) for introducing a cooling fluid into the housing (2), at least one outlet opening (11) for discharging the cooling fluid from the housing (2), and a part of the at least one cooling element (5), in particular the projection (9), can be brought into contact with the cooling fluid in order to dissipate the heat.

11. Battery module according to Claim 10,
**characterized in that**
the battery is a lithium-ion battery (4) and/or the cooling fluid is air, water, glycol or oil, for example silicone oil.

12. Battery module system (12) having a plurality of battery modules (1),
**characterized in that**
the battery module system (12) comprises at least one battery module (1) according to one or more of the preceding claims.

## Revendications

1. Module de batterie (1) comportant
un boîtier (2),
au moins deux batteries (3) disposées dans le boîtier (2) ,
au moins un élément de refroidissement (5) disposé entre les deux ou plusieurs batteries (3) pour évacuer la chaleur dégagée par les deux ou plusieurs batteries (3) entre les deux ou plusieurs batteries (3),
le ou les éléments de refroidissement (5) présentant dans la direction d'un axe x et dans la direction d'un axe y une extension plus grande que dans la direction d'un axe z,
les axes x, y et z formant un système (15) de coordonnées orthogonales,
**caractérisé en ce que**
dans la direction de l'axe x et/ou dans la direction de l'axe y, le ou les éléments de refroidissement (5) présentent une conductivité thermique plus élevée que dans la direction de l'axe z.

2. Module de batterie selon la revendication 1, **caractérisé en ce que** la conductivité thermique du ou des éléments de refroidissement (5) dans la direction de l'axe x et/ou dans la direction de l'axe y est de 2 à 300 fois plus élevée que dans la direction de l'axe z.

3. Module de batterie selon les revendications 1 ou 2, **caractérisé en ce que** la conductivité thermique du ou des éléments de refroidissement (5) dans la direction de l'axe x et/ou dans la direction de l'axe y est comprise entre 50 et 500 W/m.K.

4. Module de batterie selon l'une ou plusieurs des revendications précédentes, **caractérisé en ce que** la conductivité thermique du ou des éléments de refroidissement (5) dans la direction de l'axe z est comprise entre 0 et 70 W/m.K.

5. Module de batterie selon l'une ou plusieurs des revendications précédentes, **caractérisé en ce que** le ou les éléments de refroidissement (5) sont constitués au moins en partie de graphite.

6. Module de batterie selon l'une ou plusieurs des revendications précédentes, **caractérisé en ce que** le ou les éléments de refroidissement (5) sont configurés comme plaques (6), par exemple comme feuilles (7) dont l'épaisseur est inférieure à 1 cm.

7. Module de batterie selon l'une ou plusieurs des revendications précédentes, **caractérisé en ce que** les deux ou plusieurs batteries (3) sont planes à la surface dans les sections adjacentes à un espace intermédiaire (8) situé entre les deux batteries (3) et présentant au moins un élément de refroidissement (5).

8. Module de batterie selon l'une ou plusieurs des revendications précédentes, **caractérisé en ce que** dans les parties de la surface des deux ou plusieurs batteries (3) qui sont adjacentes à l'élément ou aux éléments de refroidissement (5) dans l'espace intermédiaire (8) situé entre les deux batteries (3), le ou les éléments de refroidissement (5) sont en contact à au moins 50 % avec les deux ou plusieurs batteries (3).

9. Module de batterie selon l'une ou plusieurs des revendications précédentes, **caractérisé en ce que** le ou les éléments de refroidissement (5) présentent un prolongement (9) qui déborde au-delà de l'espace intermédiaire (8) situé entre les deux ou plusieurs batteries (3) pour pouvoir mieux évacuer au niveau du prolongement (9) la chaleur accumulée par le ou les éléments de refroidissement (5) entre les deux ou plusieurs batteries (3).

10. Module de batterie selon l'une ou plusieurs des revendications précédentes, **caractérisé en ce que** le boîtier (2) présente au moins une ouverture d'admission (10) qui permet d'introduire un fluide de refroidissement dans le boîtier (2), au moins une ouverture de sortie (11) qui permet d'évacuer le fluide de refroidissement hors du boîtier (2), une partie du ou des éléments de refroidissement (5), en particulier le prolongement (9), pouvant être mise en contact avec le fluide de refroidissement pour permettre l'évacuation de la chaleur.

11. Module de batterie selon la revendication 10, **caractérisé en ce que** la batterie est une batterie (4) à ions lithium et/ou **en ce que** le fluide de refroidissement est l'air, de l'eau, du glycol ou une huile, par exemple une huile au silicone.

12. Système (12) de modules de batterie présentant plusieurs modules (1) de batterie, **caractérisé en ce que** le système (12) de modules de batterie présente au moins un module de batterie (1) selon l'une ou plusieurs des revendications précédentes.
